# EUROPÄISCHE PATENTSCHRIFT

(11) **EP 1 825 950 B1**
(45) Veröffentlichungstag und Bekanntmachung des Hinweises auf die Patenterteilung: **30.07.2008**
(21) Anmeldenummer: 07001702.5
(22) Anmeldetag: 26.01.2007
(51) Int. Cl.: B23Q 3/00, B65G 7/06, B23Q 3/10

(54) **Sandwichplatte zum Aufbau von Werkstück-Aufspannvorrichtungen mit Druckluftanks und -kissen**
Sandwich plate for mounting tool clamping devices, with pressurised air tanks and air cushions
Plaque en sandwich pour le montage de supports de pièces, avec des réservoirs d'air et des coussins d'air

(30) Priorität: 23.02.2006 DE 202006003100 U
(43) Veröffentlichungstag der Anmeldung: 29.08.2007
(73) Patentinhaber: Horst Witte Entwicklungs- und Vertriebs KG, 21369 Nahrendorf (DE)
(72) Erfinder: Witte, Andreas, 21354 Bleckede (DE)
(74) Vertreter: von Eichel-Streiber, Caspar

(56) Entgegenhaltungen:
- DE-A1- 2 340 811
- DE-U1- 8 627 472
- DE-U1- 20 202 108
- GB-A- 2 104 860

## Beschreibung

Die Erfindung betrifft eine Sandwichplatte nach dem Oberbegriff des Anspruches 1 (siehe, z.B., DE-8 627 472-U).

Derartige Sandwichplatten sind in den unterschiedlichsten Ausführungsformen, beispielsweise aus der EP 1 336 453 B1 bekannt. Es ist erstrebenswert, dass diese Sandwichplatten auf den Messtischen oder ähnlichen Unterlagen, auf denen sie aufgestellt sind, verschiebbar sind.

Der Erfindung liegt nun die Aufgabe zugrunde, eine Sandwichplatte der eingangs genannten Art zu schaffen, die auf einem Luftpolster ausreichend lange ohne Versorgung von einer externen Druckquelle verschiebbar ist.

Diese Aufgabe wird grundsätzlich durch die Merkmale des Anspruches 1 gelöst.

Dadurch, dass in den Hohlräumen mehrere Drucklufttanks vorgesehen sind, können diese mit einer ausreichenden Menge Druckluft gefüllt werden, die die Druckluftkissen unter der unteren Platte ausreichend und so lange mit Druckluft versorgen, dass die Verschiebung der Sandwichplatte in der gewünschten Weise möglich ist, bevor ein neues Befüllen der Drucklufttanks erfolgt. Die unter relativ hohem Druck stehende Druckluft in den Tanks reicht aus, um die Sandwichplatte in der erforderlichen Weise auf dem Messtisch oder einer anderen Unterlage zu verschieben. Die Drucklufttanks sind in vorteilhafter Weise untereinander verbunden, so dass sie einen Gesamtdruckluftvorratsbehälter bilden (Anspruch 2) .

In vorteilhafter Weise ist die Sandwichplatte der Drucklufttanks so angeordnet und dimensioniert wie in Anspruch 3 angegeben.

Wenn die Drucklufttanks beim Füllen und Entleeren ihr Volumen ändern so hat dieses keinen Einfluss auf die hoch sensible Formgenauigkeit und Lage der beiden Platten. Es ist ausreichend Raum vorhanden um die Form- und Größenänderungen der Drucklufttanks ohne Einfluss zu lassen.

Wenn die Sandwichplatte so ausgebildet ist wie in Anspruch 4 angegeben, kann aus dem Druckluftsystem, an dem die Sandwichplatte angeschlossen wird, mehr Druckluft, d.h. Druckluft mit höherem Druck in die Drucklufttanks eingebracht werden als das Druckluftsystem von Haus aus zur Verfügung stellt.

Im Folgenden wird die Erfindung unter Hinweis auf die Zeichnung anhand eines Ausführungsbeispieles näher erläutert.

Es zeigt:

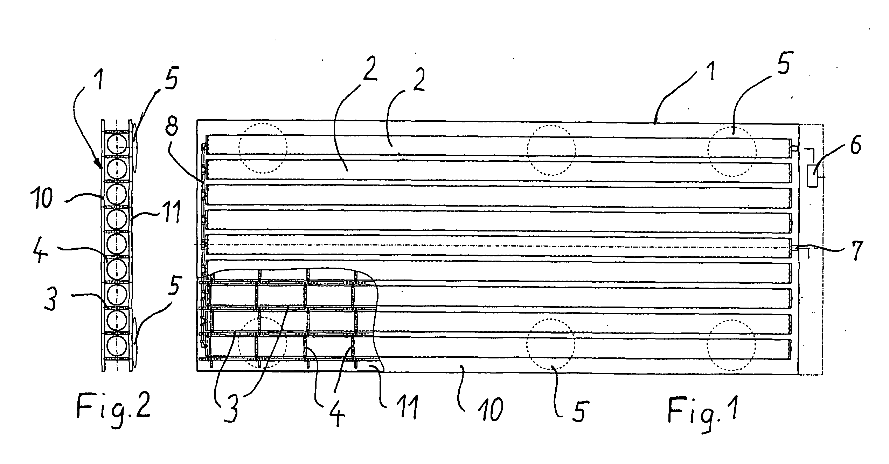

- Fig. 1: eine teilweise aufgeschnittene Draufsicht auf eine Sandwichplatte nach der Erfindung; und
- Fig. 2: einen Schnitt durch die Sandwichplatte der Fig. 1.

Die in der Zeichnung dargestellte Sandwichplatte 1 besteht aus einer oberen Platte 10 und einer unteren Platte 11. Zwischen diesen Platten befinden sich Längsstreben 3 und Querstreben 4, die für die erforderliche Festigkeit und Steifigkeit der Sandwichplatte sorgen. In den Querstreben 4 sind Bohrungen ausgebildet, in die Drucklufttanks eingesteckt sind. Die Öffnungen in den Querstreben 4 bilden zwischen den Platten 10 und 11 Hohlräume zur sicheren und eine gewisse Formänderung erlaubenden Abstützung der Drucklufttanks 2. Auf der Unterseite der unteren Platte 11 befinden sich Luftkissen 5, die über einen zentralen Ausgang 7 mit Druckluft versorgt werden. Ein entsprechendes Steuerventil (nicht gezeigt) kann von außen betätigt werden, um die Strömung der Druckluft zu den Luftkissen 5 freizugeben. Die Drucklufttanks bilden einen gemeinsamen Tank. Hierzu sind sie untereinander mit entsprechenden Druckluftleitungen 8 verbunden.

Befüllt werden die Drucklufttanks aus einem externen Druckluftsystem über einen Druckluftverstärker 6, der für eine Druckerhöhung gegenüber dem Druck in dem externen System sorgt.

Wenn die auf einem Messtisch angeordnete Sandwichplatte verschoben werden soll, wird das entsprechende Steuerventil zur Versorgung der Luftkissen geöffnet. Die Sandwichplatte kann dann, solange der Druckluftvorrat in den Drucklufttanks 2 ausreicht, verschoben werden. Der Druckluftvorrat reicht in der Praxis für mehrere Minuten. Wenn die Druckluft verbraucht ist, erfolgt ein erneutes Füllen über den Druckluftverstärker 6.

## Patentansprüche

1. Sandwichplatte zum Aufbau von Werkstück-Aufspannvorrichtungen mit einer oberen, eine Aufspannfläche bildenden Platte, einer unteren, eine Auflagefläche bildenden Platte und dazwischen liegenden Stützkörpern, die durch Versorgung mit Druckluft Druckluftkissen bilden, **dadurch gekennzeichnet, dass** in den Hohlräumen zwischen der oberen und der unteren Platte (10,11) von außen befüllbare Drucklufttanks (2) zur Versorgung der Druckluftkissen (5) an der unteren Platte (11) angeordnet sind.

2. Sandwichplatte nach Anspruch 1, **dadurch gekennzeichnet, dass** die Drucklufttanks (2) untereinander durch Druckluftleitungen (8) verbunden sind.

3. Sandwichplatte nach Anspruch 1 oder 2, **dadurch gekennzeichnet, dass** die Drucklufttanks (2) in den Hohlräumen derart frei von der oberen und der unteren Platte (10, 11) angeordnet sind, dass ihre eventuellen Größen- oder Formänderungen keinen Einfluss auf die Platten haben.

4. Sandwichplatte nach einem oder mehreren der vorstehenden Ansprüche, **dadurch gekennzeichnet, dass** das Befüllen der Drucklufttanks (2) über einen Druckverstärker (6) erfolgt.

## Claims

1. Sandwich plate for the assembly of work clamping devices with an upper plate forming a clamping area, a lower plate forming a bearing area and between the same support bodies, which form compressed air cushions through the supply of compressed air, **characterized in that** compressed air tanks (2) fillable from the outside for the supply of the compressed air cushions (5) on the lower plate (11) are located in the cavities between the upper plate (10) and lower plate (11).

2. Sandwich plate according to claim 1, **characterized in that** the compressed air tanks (2) are interconnected by compressed air lines (8).

3. Sandwich plate according to claim 1 or 2, **characterized in that** the compressed air tanks (2) are placed in the cavities in a free manner with respect to the upper and lower plates (10, 11) in such a way that any size or shape changes thereto do not influence the plates.

4. Sandwich plate according to one or more of the preceding claims, **characterized in that** the compressed air tanks (2) are filled via a booster (6).

## Revendications

1. Plaque en sandwich pour le montage de dispositifs de serrage de pièce avec une plaque supérieure, formant une surface de serrage, une plaque inférieure, formant une surface d'appui et des corps d'appui entre les deux qui forment des coussins d'air comprimé par alimentation en air comprimé, **caractérisée en ce que** dans les cavités entre la plaque supérieure et la plaque inférieure (10, 11) sont disposés des réservoirs d'air comprimé (2) pouvant être remplis de l'extérieur pour l'alimentation des coussins d'air comprimé (5) sur la plaque inférieure (11).

2. Plaque en sandwich selon la revendication 1, **caractérisée en ce que** les réservoirs d'air comprimé (2) sont reliés entre eux par des conduites d'air comprimé (8).

3. Plaque en sandwich selon la revendication 1 ou 2, **caractérisée en ce que** les réservoirs d'air comprimé (2) sont disposés dans les cavités sans la plaque supérieure et la plaque inférieure (10, 11) de telle sorte que leurs modifications éventuelles de taille ou de forme n'influent pas sur les plaques.

4. Plaque en sandwich selon l'une ou plusieurs quelconques des revendications précédentes, **caractérisée en ce que** les réservoirs d'air comprimé (2) sont remplis par un multiplicateur de pression (6).
